# DEMANDE DE BREVET EUROPEEN

(11) **EP 0 673 814 A1**
(43) Date de publication de la demande: **27.09.1995**
(21) Numéro de dépôt: 95104006.2
(22) Date de dépôt: 18.03.1995
(51) Int. Cl.: B60S 1/38

(54) **Essuie-glace de véhicule automobile comportant des moyens de guidage transversal du balai d'essuie-glace par rapport au bras d'essuie-glace**

(30) Priorité: 23.03.1994 FR 9403412
(71) Demandeur: PAUL JOURNEE S.A., F-60240 Reilly (FR)
(72) Inventeur: Journee, Maurice, F-60240 Reilly (FR)
(74) Mandataire: Lemaire, Marc

(57) **Abrégé**

L'invention propose un essuie-glace de véhicule automobile du type comportant un balai d'essuie-glace (14) qui est monté articulé à une extrémité d'un bras d'essuie-glace dont la portion d'extrémité (12) présente, en section transversale par un plan sensiblement perpendiculaire à la direction du bras d'essuie-glace, une forme en U renversé et est susceptible de chevaucher au moins partiellement une partie du balai d'essuie-glace (14), caractérisé en ce que la portion d'extrémité (12) du bras d'essuie-glace comporte des moyens (36) de guidage transversal du balai d'essuie-glace (14) par rapport au bras d'essuie-glace.

## Description

La présente invention concerne un essuie-glace de véhicule automobile.

L'invention concerne plus particulièrement un essuie-glace du type comportant un balai d'essuie-glace gui est monté articulé à une extrémité d'un bras d'essuie-glace dont la portion d'extrémité présente, en section transversale par un plan sensiblement perpendiculaire à la direction générale du bras d'essuie-glace, une forme en U inversé et est susceptible de chevaucher au moins partiellement une partie du balai d'essuie-glace.

Dans une telle conception, lorsque la partie d'essuie-glace est chevauchée par la portion d'extrémité du bras d'essuie-glace, c'est-à-dire lorsque les ailes latérales de la portion d'extrémité du bras d'essuie-glace sont agencées de part et d'autre des joues latérales de la partie du balai d'essuie-glace, la déformation des différents composants et les vibrations auxquelles ils sont soumis en fonctionnement aboutissent à des chocs entre les parties en vis-à-vis du balai d'essuie-glace et du bras d'essuie-glace qui sont générateurs de bruits qui nuisent au confort d'utilisation du véhicule.

La présente invention a pour but de proposer une nouvelle conception d'un essuie-glace gui remédie à cet inconvénient.

Dans ce but, l'invention propose un essuie-glace de véhicule automobile du type comportant un balai d'essuie-glace qui est monté articulé à une extrémité d'un bras d'essuie-glace dont la portion d'extrémité présente, en section transversale par un plan sensiblement perpendiculaire à la direction du bras d'essuie-glace, une forme en U renversé et est susceptible de chevaucher au moins partiellement une partie du balai d'essuie-glace, la portion d'extrémité du bras d'essuie-glace comportant des moyens de guidage transversal du balai d'essuie-glace par rapport au bras d'essuie-glace, caractérisé en ce que la portion d'extrémité du bras d'essuie-glace comporte deux ailes latérales parallèles dont l'une au moins porte une cale de guidage transversal du balai d'essuie-glace gui est interposée entre une face intérieure de l'aile latérale de la portion d'extrémité du bras d'essuie-glace et une portion de surface en vis-à-vis de la partie du balai d'essuie-glace.

Selon d'autres caractéristiques de l'invention :
- la cale de guidage est constituée par l'une des deux faces parallèles d'un fourreau de guidage qui chevauche le bord inférieur libre de l'aile latérale du bras d'essuie-glace ;
- la cale de guidage est portée par un prolongement de l'aile latérale du bras d'essuie-glace oui s'étend depuis le bord inférieur libre de cette dernière ;
- il est prévu des moyens d'accrochage de la cale de guidage sur l'aile latérale du bras d'essuie-glace ;
- la portion d'extrémité du bras d'essuie-glace présente une symétrie de conception par rapport à un plan longitudinal médian et chacune des deux ailes latérales de cette portion d'extrémité porte une cale de guidage;
- l'essuie-glace est équipé d'un déflecteur aérodynamique qui s'étend longitudinalement sur au moins une partie de la longueur du balai d'essuie-glace et qui comporte au moins un étrier transversal de fixation qui chevauche le balai d'essuie-glace, l'étrier est agencé en regard de la portion d'extrémité du bras d'essuie-glace et lesdits moyens de guidage transversal sont agencés entre le bras d'essuie-glace et le déflecteur aérodynamique ;
- les moyens de guidage transversal comportent un doigt de guidage qui s'étend depuis la portion d'extrémité du bras d'essuie-glace et qui est reçu dans un trou de guidage formé dans une patte qui relie l'étrier au déflecteur aérodynamique ;
- la portion d'extrémité du bras d'essuie-glace comporte deux ailes latérales parallèles et le doigt de guidage s'étend depuis le bord inférieur libre de l'une des ailes latérales ;
- un étui antibruit recouvre le doigt de guidage;
- le déflecteur aérodynamique comporte au moins un second étrier transversal de fixation qui chevauche le balai d'essuie-glace, les deux étriers étant agencés de part et d'autre de la partie centrale du déflecteur ;
- le déflecteur comporte dans sa partie centrale d'une part des moyens de liaison démontables du balai d'essuie-glace et d'autre part des moyens d'articulation du bras porte-balais.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique de dessus des principaux composants d'un premier mode de réalisation d'un essuie-glace réalisé conformément aux enseignements de l'invention ;
- la figure 2 est une vue latérale à plus grande échelle selon la flèche F2 de la figure 1 ;
- la figure 3 est une vue en section selon la ligne 3-3 de la figure 2 ;
- la figure 4 est une vue détail en perspective illustrant les moyens de guidage transversal
- la figure 5 est une vue en section selon la ligne 5-5 de la figure 1 ;
- la figure 6 est une vue en section selon la ligne 6-6 de la figure 1 qui illustre un deuxième mode de réalisation des moyens de guidage transversal agencés entre le bras d'essuie-glace et le déflecteur aérodynamique ;
- la figure 7 est une vue de détail en perspective des moyens de guidage transversal selon ce deuxième mode de réalisation ; et
- la figure 8 est une vue latérale de détail, suivant la flèche F8 de la figure 6, qui illustre une variante de réalisation du doigt de guidage.

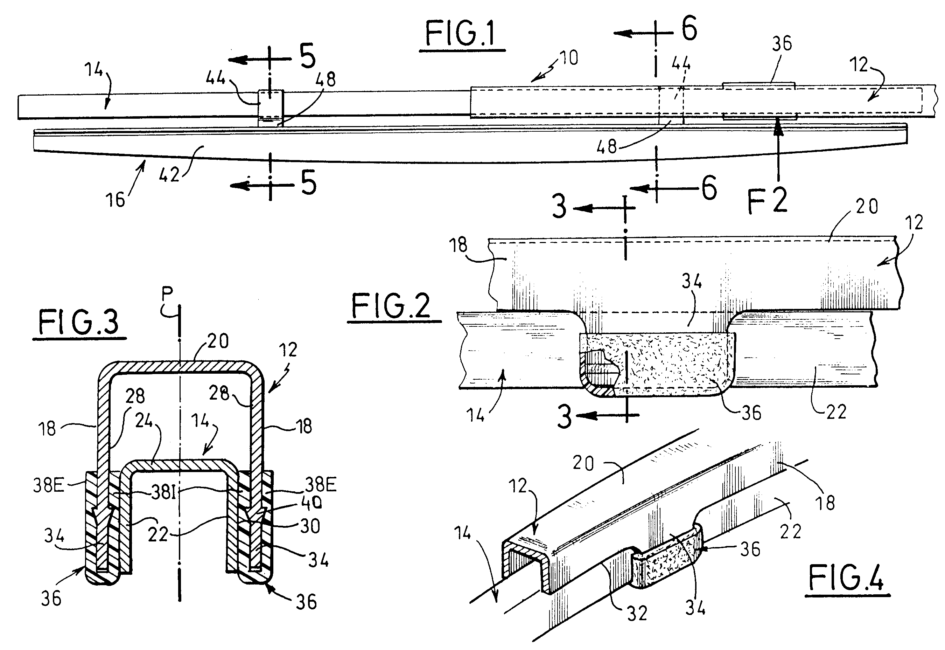

On a illustré sur la figure 1 la partie d'extrémité d'un essuie-glace 10 qui est pour l'essentiel constituée par la portion d'extrémité 12 d'un bras d'essuie-glace, par un balai d'essuie-glace 14 et par un déflecteur aérodynamique 16.

Comme on peut le voir notamment sur la figure 3, la portion d'extrémité 12 du bras d'essuie-glace est une pièce en tôle pliée qui présente, en section transversale, sensiblement la forme d'un U renversé constitué par deux ailes latérales parallèles 18 qui sont reliées entre elles par un dos supérieur horizontal 20.

Comme on peut le voir également sur la figure 4, l'élément principal, également appelé pont principal, du balai d'essuie-glace 14, qui est le seul composant du balai 14 représenté sur les figures, est une pièce en tôle pliée qui présente, en section transversale, sensiblement la forme d'un U renversé et qui est constituée par deux joues latérales parallèles 22 reliées entre elles par un dos supérieur horizontal 24.

Le balai d'essuie-glace 14 est articulé dans sa partie centrale sur l'extrémité libre de la portion d'extrémité 12 du bras d'essuie-glace par des moyens qui ne sont pas représentés sur les figures et qui permettent un pivotement du balai d'essuie-glace 14 par rapport à la portion d'extrémité 12 autour d'un axe de pivotement sensiblement perpendiculaire à la direction générale commune au bras d'essuie-glace 12 et au balai d'essuie-glace 14.

Comme cela est illustré sur la figure 4, la portion d'extrémité 12 du bras d'essuie-glace est susceptible de chevaucher au moins partiellement la partie en vis-à-vis du pont principal du balai d'essuie-glace 14, c'est-à-dire la partie de droite en considérant la figure 1 de telle manière que les faces intérieures 28 des ailes latérales 28 sont susceptibles d'être agencées en vis-à-vis des faces extérieures 30 des joues latérales 22.

Afin d'assurer un guidage transversal du balai d'essuie-glace 14 par rapport à la portion d'extrémité 12 du bras d'essuie-glace, il est prévu, conformément aux enseignements de l'invention, des cales de guidage.

A cet effet, chacune des deux ailes latérales 18 se prolonge verticalement en-dessous de son bord inférieur libre 32 par une patte verticale 34, réalisée venue de matière avec l'aile latérale 18 qui s'étend en regard de la joue latérale correspondante 22 du balai d'essuie-glace 14.

La portion d'extrémité 12 du bras d'essuie-glace et le balai d'essuie-glace 14 présentent une symétrie générale de conception par rapport à un plan longitudinal médian P indiqué sur la figure 3 et chacune des deux pattes 34 est équipée d'une cale de guidage transversal 36 qui est réalisée sous la forme d'un fourreau en matière plastique antibruit.

Chaque fourreau 36 est constitué pour l'essentiel par deux faces planes parallèles 38E et 38I.

Chacune des faces intérieures 38I d'un fourreau 36 constitue la cale de guidage proprement dite au sens de l'invention qui est reçue entre la face intérieure 28 de l'aile latérale 18 et la face extérieure en vis-à-vis 30 de la joue latérale 22 du balai d'essuie-glace 14.

Chaque fourreau de guidage 36 est accroché en position sur la patte correspondante 34 au moyen d'un harpon 40 illustré sur la figure 3.

Le déflecteur aérodynamique 16 est une pièce en matière plastique en forme de lame déflectrice 42.

Les moyens de fixation du déflecteur aérodynamique 16 sur l'essuie-glace 10 comportent deux étriers de fixation 44 réalisés venus de matière par moulage avec le déflecteur 16.

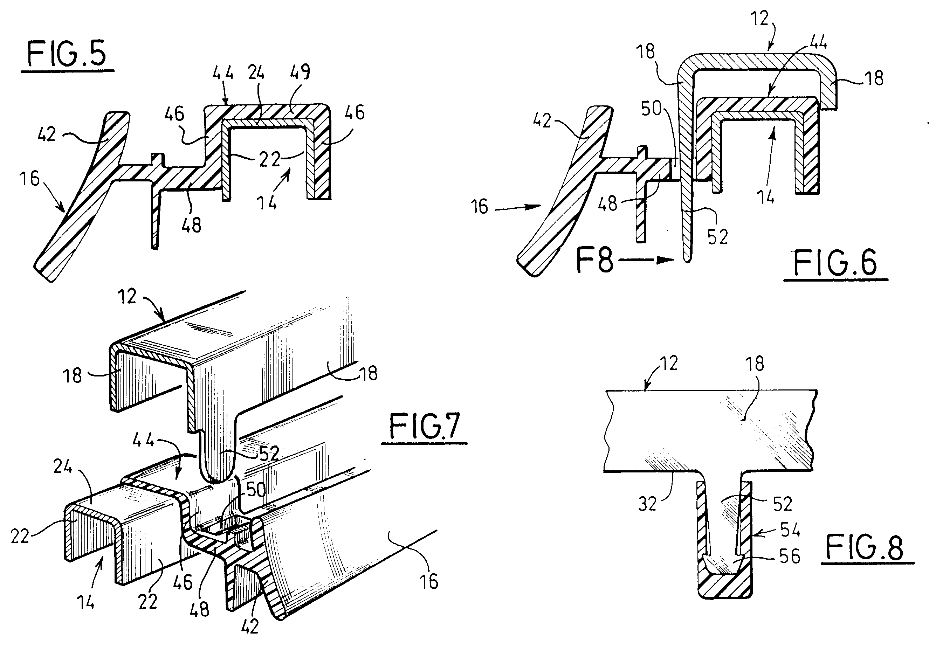

Comme on peut le voir sur les figures 5 et 6, chaque étrier 44 présente, en section transversale, sensiblement la forme d'un U renversé constitué par deux parois latérales parallèles 46 reliées entre elles par un dos supérieur horizontal 49 et qui chevauche une partie correspondante du pont principal du balai d'essuie-glace 14.

Chaque étrier 44 est relié à la lame déflectrice 42 par une patte de liaison 48 réalisée venue de matière par moulage.

Dans la variante de réalisation illustrée sur la figure 6, l'étrier 44 qui est agencé en regard de la portion d'extrémité 12 du bras d'essuie-glace comporte, dans sa patte de liaison 48 un trou débouchant 50 qui est prévu pour recevoir un doigt de guidage 52 formé sur la portion d'extrémité en vis-à-vis 12 du bras d'essuie-glace.

A cet effet, et comme on peut le voir sur les figures 6 à 8, le doigt 52 s'étend verticalement depuis le bord inférieur 32 de l'aile latérale correspondante 18 de la portion d'extrémité 12 du bras d'essuie-glace et il est reçu dans le trou 50 assurant ainsi un guidage transversal indirect du balai d'essuie-glace 14 par rapport à la portion d'extrémité 12 du bras d'essuie-glace.

Dans la variante de réalisation illustrée sur la figure 8, on peut voir que le doigt de guidage 52 peut être muni d'un étui ou fourreau antibruit 54 qui est enfilé sur le doigt de guidage 52 auquel il est accroché par des harpons 56.

Selon une variante de réalisation connue et qui n'est pas représentée sur les figures, le déflecteur aérodynamique 16 peut également être fixé au balai d'essuie-glace 14 et à l'extrémité libre 26 du bras d'essuie-glace au moyen d'un connecteur d'articulation agencé dans la partie centrale.

Dans les différents modes de réalisation qui viennent d'être décrits, on constate qu'il existe des moyens de guidage transversal direct, ou indirect, du balai d'essuie-glace 14 par rapport au bras d'essuie-glace 12 qui sont de conception particulièrement simple et qui sont indépendants des moyens d'articulation du balai d'essuie-glace 14 sur le bras d'essuie-glace 12.

## Revendications

1. Essuie-glace (10) de véhicule automobile du type comportant un balai d'essuie-glace (14) qui est monté articulé à une extrémité (26) d'un bras d'essuie-glace dont la portion d'extrémité (12) présente, en section transversale par un plan sensiblement perpendiculaire à la direction du bras d'essuie-glace, une forme en U renversé et est susceptible de chevaucher au moins partiellement une partie du balai d'essuie-glace (14), la portion d'extrémité (12) du bras d'essuie-glace comportant des moyens (36) de guidage transversal du balai d'essuie-glace (14) par rapport au bras d'essuie-glace, caractérisé en ce que la portion d'extrémité (12) du bras d'essuie-glace comporte deux ailes latérales parallèles (18) dont l'une au moins porte une cale (36) de guidage transversal du balai d'essuie-glace (14) qui est interposée entre une face intérieure (28) de l'aile latérale (18) de la portion d'extrémité (12) du bras d'essuie-glace et une portion de surface en vis-à-vis (30) de la partie du balai d'essuie-glace (14).

2. Essuie-glace selon la revendication 1, caractérisé en ce que la cale de guidage est constituée par l'une (38I) des deux faces parallèles (38E, 38I) d'un fourreau de guidage (36) qui chevauche le bord inférieur libre (32) de l'aile latérale (18) de la portion d'extrémité (12) du bras d'essuie-glace.

3. Essuie-glace selon l'une des revendications 1 ou 2, caractérisé en ce que la cale de guidage est portée par un prolongement (34) de l'aile latérale (18) du bras d'essuie-glace (12) qui s'étend depuis le bord inférieur libre (32) de cette dernière.

4. Essuie-glace selon l'une quelconque des revendications 1 à 3, caractérisé en ce qu'il est prévu des moyens (40) d'accrochage de la cale de guidage (36) sur l'aile latérale (18, 34) du bras d'essuie-glace (12).

5. Essuie-glace selon l'une quelconque des revendications 1 à 4, caractérisé en ce que la portion d'extrémité (12) du bras d'essuie-glace présente une symétrie de conception par rapport à un plan longitudinal médian (P), et en ce que chacune des deux ailes latérales (18) de cette portion d'extrémité (12) porte une cale de guidage (36).

6. Essuie-glace selon l'une quelconque des revendications précédentes, caractérisé en ce que l'essuie-glace est équipé d'un déflecteur aérodynamique (16) qui s'étend longitudinalement sur au moins une partie de la longueur du balai d'essuie-glace (14) et qui comporte au moins un étrier transversal de fixation (44) qui chevauche le balai d'essuie-glace (14), en ce que l'étrier est agencé en regard de la portion d'extrémité (12) du bras d'essuie-glace et en ce que lesdits moyens de guidage transversal (50, 52) sont agencés entre le bras d'essuie-glace (12) et le déflecteur aérodynamique (16).

7. Essuie-glace selon la revendication 6, caractérisé en ce que les moyens de guidage transversal comportent un doigt de guidage (52) qui s'étend depuis la portion d'extrémité (12) du bras d'essuie-glace et qui est reçu dans un trou de guidage (50) formé dans une patte (48) qui relie l'étrier (44) au déflecteur aérodynamique (16).

8. Essuie-glace selon la revendication 7, caractérisé en ce que la portion d'extrémité (12) du bras d'essuie-glace comporte deux ailes latérales parallèles (18), et en ce que le doigt de guidage (52) s'étend depuis le bord inférieur libre (32) de l'une des ailes latérales (18).

9. Essuie-glace selon l'une des revendications 7 ou 8, caractérisé en ce qu'un étui antibruit (54) recouvre le doigt de guidage (52).

10. Essuie-glace selon l'une quelconque des revendications 7 à 9, caractérisé en ce que le déflecteur aérodynamique (16) comporte au moins un second étrier transversal de fixation (44) qui chevauche le balai d'essuie-glace (14), et en ce que les deux étriers (44) sont agencés de part et d'autre de la partie centrale du déflecteur (16).

11. Essuie-glace selon l'une quelconque des revendications précédentes, caractérisé en ce que le déflecteur aérodynamique (16) comporte dans sa partie centrale d'une part des moyens de liaison démontables du balai d'essuie-glace (14) et d'autre part des moyens d'articulation du bras porte-balais (12).
